# EUROPEAN PATENT APPLICATION

(11) **EP 0 742 666 A2**
(43) Date of publication of application: **13.11.1996**
(21) Application number: 96107351.7
(22) Date of filing: 09.05.1996
(51) Int. Cl.: H04N 1/42

(54) **Information retrieval device and method**

(30) Priority: 12.05.1995 JP 114207/95; 20.02.1996 JP 70843/96; 04.04.1996 JP 82651/96; 24.04.1996 JP 102490/96
(71) Applicant: FUJI XEROX CO., LTD., Minato-ku, Tokyo (JP)
(72) Inventor: Nakagawa, Yoshihiro, c/o Fuji Xerox Co., Ltd., , Takatsu-ku, Kawasaki-shi, Kanagawa (JP); Sasaki, Hidekazu, c/o Fuji Xerox Co., Ltd., , Takatsu-ku, Kawasaki-shi, Kanagawa (JP); Takeda, Masaru, c/o Fuji Xerox Co., Ltd., , Takatsu-ku, Kawasaki-shi, Kanagawa (JP); Ohki, Nobuhiko, c/o Fuji Xerox Co., Ltd., , Takatsu-ku, Kawasaki-shi, Kanagawa (JP)
(74) Representative: Boeters, Hans Dietrich, Dr.

(57) **Abstract**

A form analysis unit receives data representative of a selected form with a selection indications added to a blank form through facsimile transfer or image read, and analyzes the data to create required data for retrieval. A retrieval unit starts retrieval from a retrieval starting position designated by the required data for retrieval thereby to access one or plural information objects. A form creation unit creates a new blank form on the basis of the one or plural information objects to be supplied to a user. Using the one or plural new blank forms, the user instructs to continue retrieval for more detailed levels, thereby acquiring a desired document.

## Description

### BACKGROUND OF THE INVENTION

The present invention relates to an information retrieval device and method, and more particularly to an information retrieval device and method for retrieving information such a hyper text having a structure in which an information object is coupled with other information objects.

As information provision service in an internet, a world wide web (WWW) which permits information to be looked in a hyper text format is well known. The information of WWW is supplied by WWW servers connected to the internet, and an information object of the information supplied by the WWW servers is correlated with other information objects (another information object(s) by the WWW server himself or information objects of other WWW servers). A user can sequentially access information objects in accordance with the correlation using a WWW browser such as Mosaic to acquire a target information object. The sequential accessing can be performed by clicking select items. Specifically, if a desired selection item is clicked while one information object is being browsed, a more detailed information object can be browsed. When selection items are selected several times, the target information object can be reached.

However, a rather long time was taken to acquire the target information object by clicking the select items while blousing the information object of the WWW server, and the operation therefor was also troublesome.

It has been demanded to acquire a target information object simply in a short time using an easily understandable guiding means.

Accessing the information of WWW requires a workstation or personal computer connected to the internet, and requires to carry out an interactive operation through the WWW browser. Thus, if there is not a workstation connected to the internet by his side, nor a desired WWW browser, the information of the WWW server cannot be acquired.

If the information of WWW can be accessed by a simple operation even when there is not the workstation connected to the internet by his side and the WWW browser cannot be used, it is very convenient.

A patent reference, Japanese Patent Unexamined Publication No. Hei. 6-98062 is relative to the present invention. This reference discloses a technique of accessing a data base using the image information in a predetermined form transferred through a facsimile device. In the technique disclosed in this reference, a user facsimile-transfers the form with checked prescribed boxes, and a response control side of a facsimile server creates a new form corresponding to the checked boxes and transfers it to the user. The user checks the prescribed boxes of the received new form and transfers it to the response control side. By repetition of the above operations, the user can request the facsimile server to provide complicated instructions. This reference, however, does not entirely disclose a method of acquiring a desired information object by sequentially tracking the information objects in a network of information such as hyper text in which a certain information object is correlated with other information objects and also does not disclose a method of designating a retrieval path along a correlated link using a prescribed form to take out a desired information object.

### SUMMARY OF THE INVENTION

Under the above circumstance, the present invention has been accomplished and intends to provide an information retrieval technique which can access the information such as data in a hyper text structure whose information object is correlated with other information objects by a simple operation of adding a select indication to a prescribed form providing useful information about the presence of the information object, thereby acquiring a target information object simply and in a short time, and permitting retrieval to be performed by an image input means such as a facsimile.

The information retrieval device according to the present invention, in order to attain the above object, comprises means for inputting data representative of a selected form inclusive of a form discriminator and a select indication of a select item, means for accessing, in accordance with data representative of said selected form, at least one information object of an information object network in which each of information objects is correlated with at least one of other information objects, means for creating data representative of a blank form inclusive of the select item on the basis of the at least one selected information object, and means for outputting the data representative of the blank form.

In the information retrieval device according to the present invention, said means for inputting the data representative of said selected form may be a facsimile receiver for receiving the data representative of said selected form that is facsimile-transferred.

Said means for inputting the data representative of said selected form may be an optical reader for optically reading the selected form to create data representative of the selected form.

Said means for outputting data representative of the blank form may be a facsimile transmitter.

Said means for outputting data representative of the blank form, may be means for printing the blank form in accordance with the data representative of the blank form.

Said blank form may be created on the basis of a plurality of information objects with different hierarchical levels, and said select items may be included in the blank form in a format representative of the hierarchical level.

The format representative of the hierarchical level may include an indent according to the hierarchical level.

The information object network may be a hyper text.

Said accessing means may be connected to a server for providing the information object network through a network.

The means for creating the data representative of said blank form may create the data representative of a document of retrieval result, and the means for outputting the data representative of said blank form may output data representative of the document.

The information retrieval method according to the present invention, in order to attain the above object, carries out the steps of inputting data representative of a selected form inclusive of a form discriminator and a select indication of a select item, accessing, in accordance with data representative of said selected form, at least one information object of an information object, network in which each of information objects is correlated with at least one of other information objects, creating data representative of a blank form inclusive of the select item on the basis of the at least one selected information object, and outputting the data representative of the blank form.

The program product for information retrieval according to the present invention, in order to attain the above object, is used to cause a computer to carry out the steps of inputting data representative of a selected form inclusive of a form discriminator and a select indication of a select item, accessing, in accordance with data representative of said selected form, at least one information object of an information object network in which each of information objects is correlated with at least one of other information objects, creating data representative of a blank form inclusive of the select item on the basis of the at least one selected information object, and outputting the data representative of the blank form.

In accordance with the present invention, a retrieval starting position is designated by data representative of the selected form with a select indication added to a blank form; one or plural information objects are accessed by predetermined retrieval; and a new blank form is created on the basis of one or plural information objects and supplied to a user. This permits the user to instruct continuation of retrieval of more detailed levels. Using the blank form newly created by the precedent retrieval, the user can continue the retrieval for the information object network such a hyper text in accordance with its structure, thereby acquiring a desired information object (document) by a new one or plural blank forms.

In the present invention, since retrieval is instructed by addition of a check indication to a blank form, even when a resource such as a terminal is not present by his side, the retrieval can be done using a facsimile device.

If a plurality of information objects are accessed and they are displayed on a sheet of blank form, the retrieval over a plurality of hierarchical levels can be accomplished by processing the single sheet of blank, thus permitting quick retrieval. In addition, if hierarchical levels can be displayed in the form of a blank form using indents, a user can instruct the retrieval under consciousness of the hierarchical levels. This is very convenient.

### BRIEF DESCRIPTION OF THE DRAWINGS

Fig. 1 is a block diagram showing the entire arrangement of the first embodiment of the present invention.

Fig. 2 is a flowchart for explaining the brief overview of the operation of the first embodiment of the present invention.

Fig. 3 is a view showing an example of an initial form used in the first embodiment.

Fig. 4 is a view showing a display example of the user interface used in registering the initial form in the first embodiment.

Fig. 5 is a view showing data exchange in registering the initial form.

Fig. 6 is a flowchart showing the operation of a retrieval section in registering the initial form.

Fig. 7 is a flowchart showing the operation of a form processing section in registering the initial form.

Fig. 8 is a view showing data exchange in information provision in the first embodiment.

Fig. 9 is a view showing an example of the selection form created by the information provision.

Figs. 10(A) to 10(C) are views showing display examples of the image frame related to creation of the selection form.

Fig. 11 is a flowchart showing the operation of the form processing section in receiving an inquiry of information provision.

Fig. 12 is a flowchart showing the operation of the form processing section in processing the information provision.

Fig. 13 is a flowchart showing the operation of the retrieval section in processing the information provision.

Fig. 14 is a flowchart showing the detailed operation of automatic retrieval processing in Fig. 13.

Fig. 15 is a block diagram showing the entire arrangement of the second embodiment of the present invention.

Fig. 16 is a view showing data exchange in registering an initial form in the second embodiment.

Fig. 17 is a flowchart showing the operation of the form processing section in registering an initial form in the second embodiment.

Fig. 18 is a view showing data exchange in data provision in the second embodiment.

Fig. 19 is a flowchart showing the operation of the form processing section in receiving an inquiry of information provision in the second embodiment.

Fig. 20 is a flowchart showing the operation of the form processing section in processing the information provision.

### DETAILED DESCRIPTION OF THE PREFERRED EMBODIMENTS

Now referring to the drawings, preferred embodiments of the present invention will be described.

### [Embodiment 1]

A first embodiment of the present invention will be described. In this embodiment, remote retrieval can be done using a facsimile device.

### [1.1 Entire Arrangement]

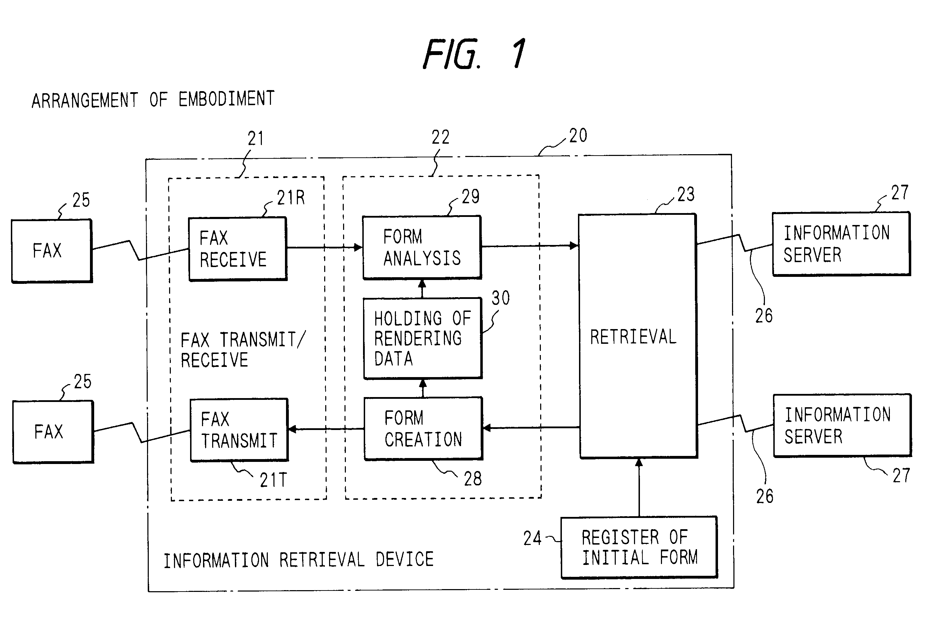

Fig. 1 shows the entire arrangement of the first embodiment of the present invention. In Fig. 1, an information retrieval device 20 includes a facsimile transmit/receive unit 21, a form processing unit 22, a retrieval unit 23 and an initial form register unit 24. The facsimile transmit/receive unit 21 includes a facsimile receive unit 21R and a facsimile transmit unit 21T which are connected to external facsimile devices 25 via prescribed communication paths, respectively. The retrieval unit 23 has a function of communication control, and is connected to information servers 27 through a network 26. Each of the information servers 27 holds information such as that in a hyper text in which an information object is related to other information objects in the same information server 27 or objects in the other information server 27. The information servers 27 may be a WWW server (which holds information described by HTML (Hyper Text Mark-up Language)) in an internet. Such an information server 27 permits a desired information object (document) to be reached by sequentially tracing links among the information objects.

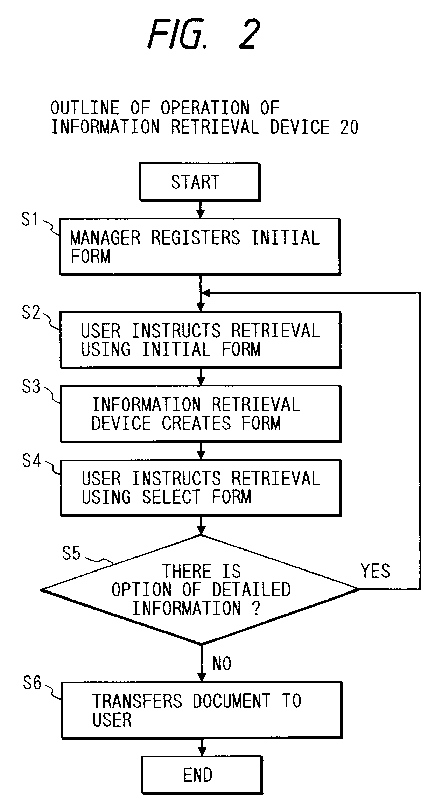

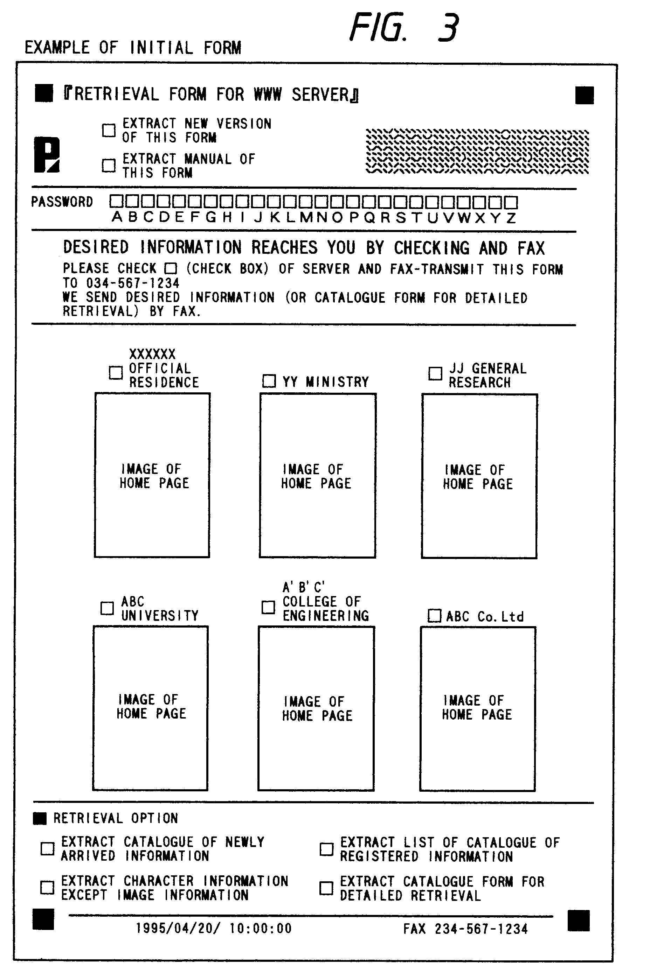

Before detailed explanation of the respective units of the information retrieval device 20, for convenience of description, referring to Fig. 2, a brief explanation will be given of the operation of the information retrieval device 20. In Fig. 2, first, an initial form is registered by a manager of the information retrieval device (S1). The initial form is used to display a bar code for form discrimination and a list of names of information servers usable by a user. Check boxes for selection are indicated near the names. If the information servers 27 are WWW servers, as illustrated in Fig. 3, the initial form may contain an image of a home page (initial page) of each of the WWW servers 27. The initial form may contain options in retrieval as select items. In the example shown in Fig. 3, selection can be made from extraction of a list of pieces of newly-arrived information, extraction of only character information, extraction of a catalogue of pieces of registered information in a list format and extraction of a catalogue form (referred to as "select form") for detailed retrieval. The following explanation will be mainly directed to the extraction of the select form.

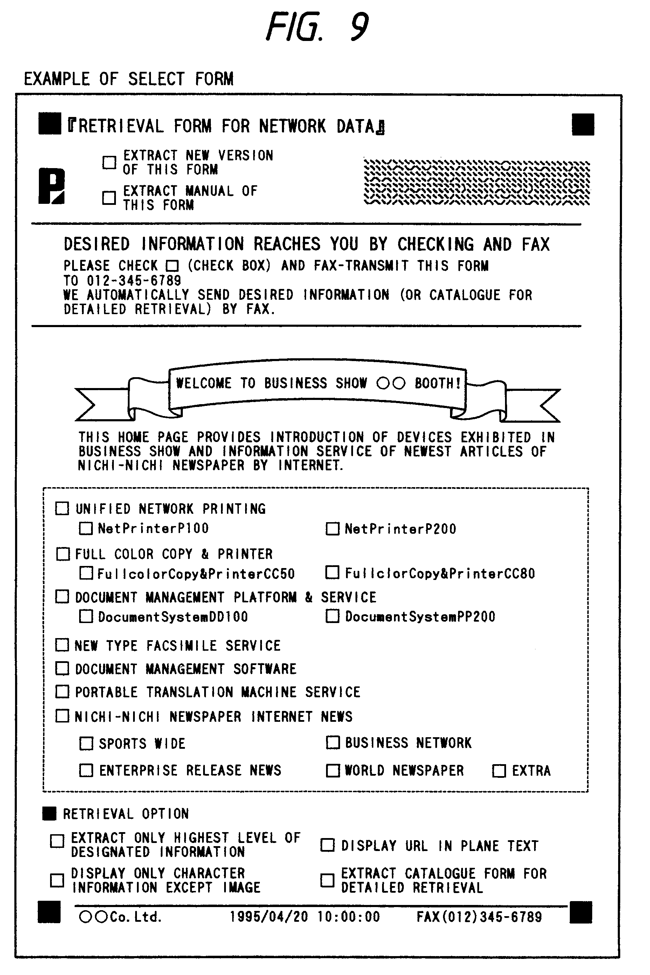

After a user has registered the initial form, he obtains the initial form via facsimile transmission. The user facsimile-transmits a retrieval instruction to the information retrieval device 20 using the selected initial form with a select indication of the information server 27 (S2). The information retrieval device 20 executes retrieval in response to the retrieval instruction using the selected initial form and creates a select form containing options of detailed information for subsequent selection (S3). The select form contains a bar code indication for form discrimination, indications of the pertinent options and check boxes of the options (see Fig. 9).

After the select form has been created, the user can obtain the select form through facsimile transmission and facsimile-transmits an instruction for subsequent retrieval to the information retrieval device 20 using the selected select form with a select indication(s) added to the select form (S4).

The information retrieval device 20 executes retrieval in accordance with this retrieval instruction, and facsimile-transmits a desired document, if it has been reached, to the user. If the option(s) remains, the same steps will be repeated (S5).

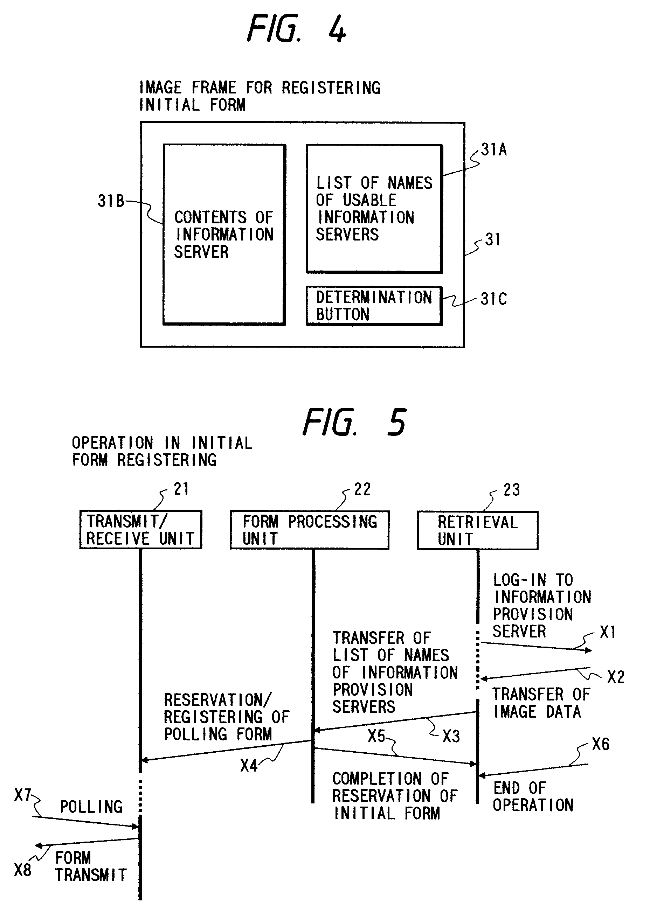

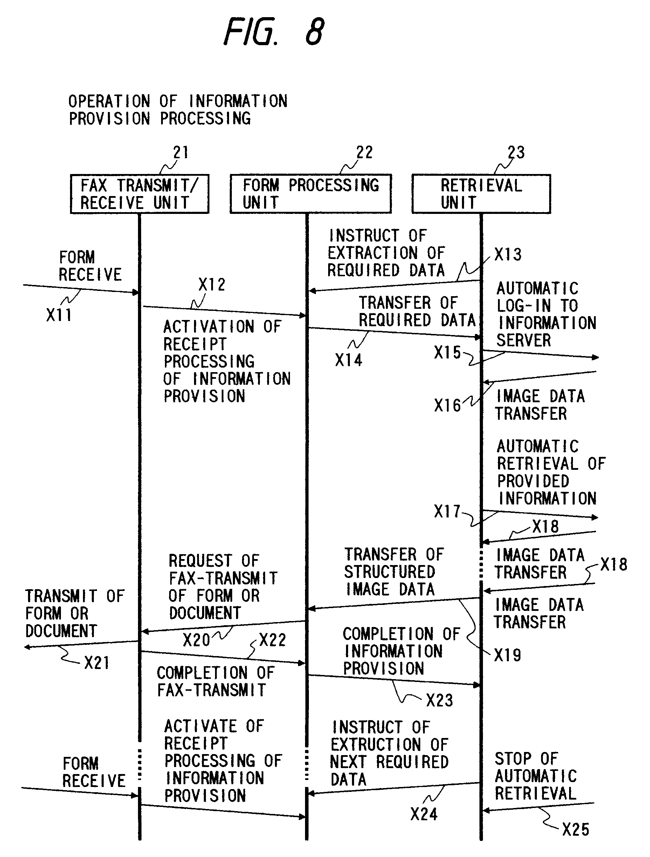

Returning to Fig. 1, the respective units of the information retrieval device 20 will be described in detail. An initial form register unit 24 of the information retrieval device 20 serves to register an information server(s) usable by a user and create an initial form having items for selecting the information server to be retrieved. This initial form register unit 24 will be described later with reference to Figs. 4 to 7. A form processing unit 22 includes a form creation unit 28, a form analysis unit 29, and a rendering data holding unit 30. The form creation unit 28 creates image data of an initial form and a select form and sends the image data to the facsimile transmit/receive unit 21 so that users for the external facsimile devices 25 can use the initial form and the select form. The form analysis unit 29 analyses the image of the checked form which has been transmitted from a user for the external facsimile device 25 through the facsimile transmit/receive unit 21, thereby deciding an instruction by the user to create required data. The rendering data holding unit 30 holds rendering data of the form created by the form creation unit 28. The rendering data are used when the form analysis unit 29 analyses the above checked form. The details of the form creation unit 28 and form analysis unit 29 will be explained later with reference to Fig. 8 et seq.

The retrieval unit 23 accesses the information servers 27 in accordance with required data from the form analysis unit 29 to acquire a desired information object and transmits the acquired data to the form creation unit 28 in the form processing unit 22. The details of the retrieval unit 23 will be also explained with reference to Fig. 8 et seq.

It should be noted that the information retrieval device 20 may be an information processing device such as a workstation or a personal computer, and the respective units of the information retrieval device 20 may be hardware resources and/or software resources of the information processing device.

### [1.2 Registering of Information Servers]

The registering of information servers will next be explained. The information servers are registered using an initial register software executed by the information retrieval device 20. The initial registering software presents a user interface as shown in Fig. 4 on a display screen 31 of a display device (not shown) of the information retrieval device 20. The display screen 31 includes an area 31A for displaying a list of names of information servers usable by a user, an area 31B for displaying the contents of each of the information servers and a determination button area 31C. A manager of the information retrieval device 20 selects a desired information server 27 as a server usable by the user, causes the name of the selected server to be displayed on the list and operates the determination button to determine the usable information server(s).

Fig. 5 shows exchange of data among the facsimile transmit/receive unit 21, the form processing unit 22 and retrieval unit 23 in registering the information serves. As seen from the figure, the manager sequentially logs in to desired information server 27 (X1), receives an image data from each of the servers (X2) and add the names of the desired servers to a list of information servers. When the usable information server(s) 27 is finally determined, the manager transmits the list to the form processing unit 22 (X3). The form processing unit 22 creates rendering data on the basis of the list of the server names received and transmits the image data of the initial form to the facsimile transmit/receive unit 21 (X4). It should be noted that the rendering data are stored in the rendering data holding unit 30. The facsimile transmit/receive unit 21 registers reservation of the image data of the initial form and transmits the image data of the initial form to a user in response to polling from the user (X7, X8). On the other hand, when the reservation of the initial form is registered, completion of the reservation is reported to the retrieval unit (X5). Then, the retrieval operation is ended (X6).

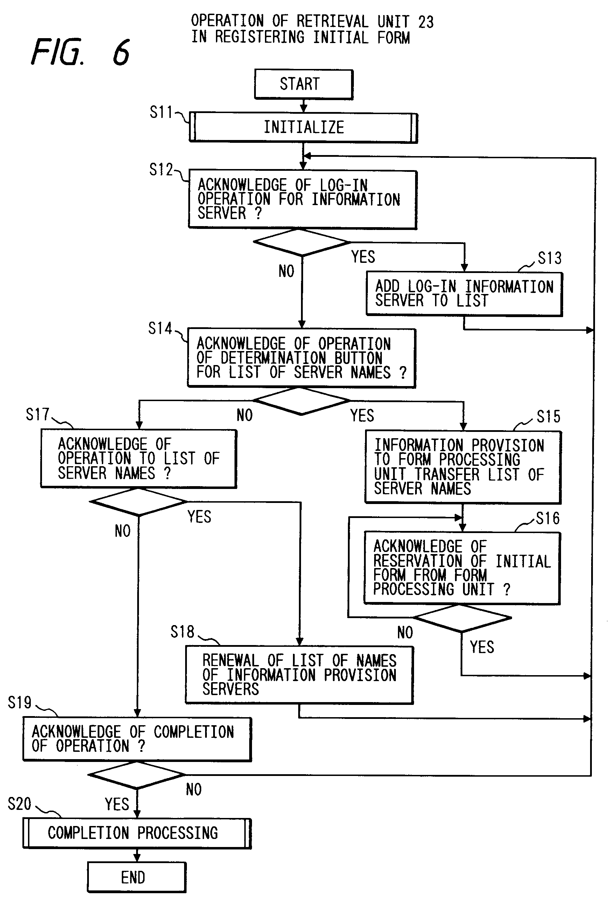

Fig. 6 shows the operation of the retrieval unit 23 in registering information servers in Fig. 5. In the figure, the initial form register unit 24 is first initialized (S11). Thereafter, when the manager logs in to desired information servers 27, the names of the logged-in information servers 27 are added to the list thereof (S12, S13). When the names of the desired information servers 27 are added to the list, the manager operates the determination button region 31C to transmit the list information to the form processing unit 22 (S14, S15), and waits for the form processing unit 22 to complete the registering of the initial form and report this (S16). The manager can operate to correct the data of the list (S17, S18). When the completion of the retrieval operation is reported, registering of the initial form is ended (S19, S20).

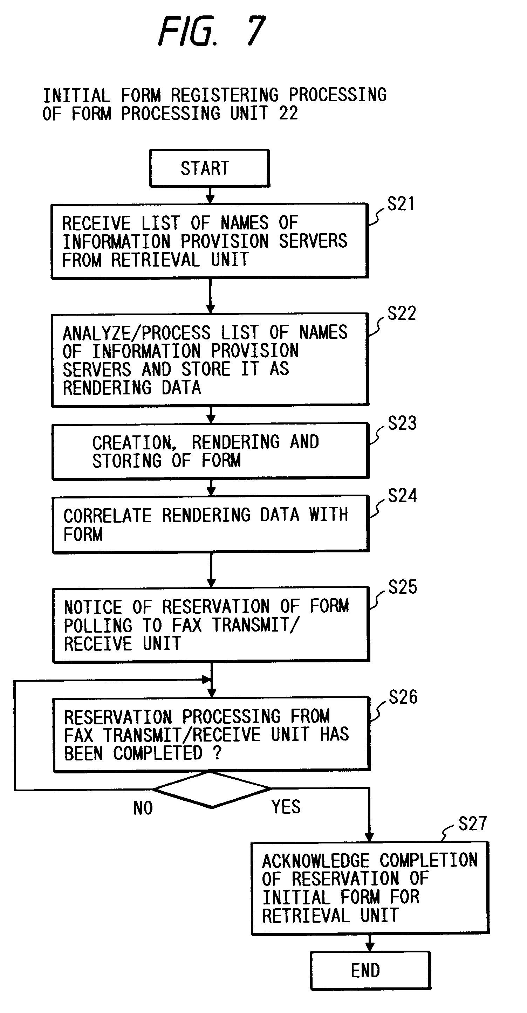

Fig. 7 shows the operation of the form processing unit 22 in registering information servers in Fig. 5. In this figure, the form processing unit 22 receives the data of the list of the names of information servers from the retrieval unit 23 (S21), analyzes and processes the received data and stores the processed data as rendering data (S22), and further creates the initial form on the basis of the rendering data (S23). The form processing unit 22, thereafter, correlates the rendering data with the form and stores the correlated data (S24). It further transmits the image data of the form to the facsimile transmit/receive unit 21 to acknowledge the reservation (S25). After acknowledge of the reservation has been completed, the data processing unit 22 acknowledges completion of the registering of the initial form, to the retrieval unit 23 (S26, S27).

The initial form can be registered in the manner described above. A user can extract the initial form by polling through the external facsimile device 25. In order for the user to execute the retrieval through the external facsimile device 25, he has only to acquire the initial form through the external facsimile device 25, check the check box corresponding to a desired information server, and transfer the checked initial form to the information retrieval device 20.

### [2. 3 Provision of Information]

Fig. 8 shows the operation of the information retrieval device 20 in retrieval. In this figure, the facsimile transmit/receive unit 21 receives image data of the initial forms (X11) to activate receipt processing for the form processing unit 22 (X12). The retrieval unit 23 instructs the form processing unit 22 to extract the required data (X13). Correspondingly, the form analysis unit 29 in the form processing unit 22 creates the data representative of an instruction by the user, i.e., the required data with reference to the rendering data in the rendering data holding unit 30, and transmits the data thus created to the retrieval unit 23 (X14). The retrieval unit 23 logs in a desired information server 27 on the basis of the required data (X15), receives the image data from the information server 27 (X16) and further repeats automatic retrieval (X17) to receive the image data for each log-in (X18). The image data are extracted along the link of information held in the information server 27 so that each of the image data has the corresponding hierarchical level. After the automatic retrieval is ended, the image data inclusive of the hierarchical levels (referred to as "structured image data" and containing characters and graphic data represented in vector and bit map data) are transferred to the form creation unit 28 of the form processing unit 22 (X19). The form creation unit 28 creates rendering data of a select form on the basis of the structured image data, and transmits the image data of the select form to the facsimile transmit/receive unit 21 (X20) which is requested to transmit the data to the external facsimile device 25 of a user (X21).

After the facsimile transmit/receive unit 21 facsimile-transmits the select form to the user side, it acknowledges completion of facsimile transmission to the form processing unit (X22), and the form processing unit 22 acknowledges completion of information provision to the retrieval unit 23 (X23). The retrieval unit 23 instructs the form processing unit 22 to extract the subsequent required data (X24) and stops the automatic retrieval (X25).

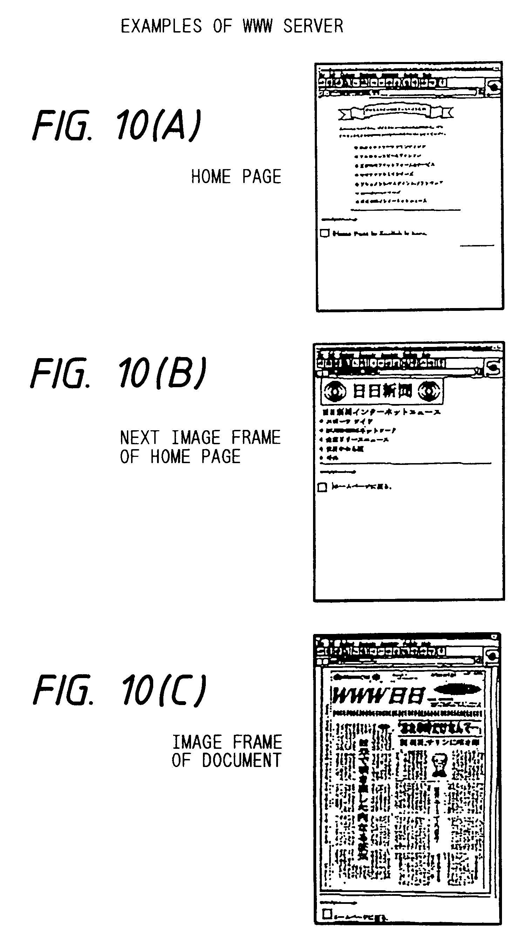

An example of the select form is illustrated in Fig. 9. This select form can be created on the basis of a home page of the WWW server shown in Fig. 10(A) and the subsequent image frame of the home page shown in Fig. 10(B). In the WWW server, when a desired select item of the image frame shown in Fig. 10(B), e.g., "sports wide" is selected by clicking or the like, the document of "sports wide" as shown in Fig. 10(C) can be extracted. In creating the select form in Fig. 9, the automatic retrieval to the level lower by one rank than the home page is executed to provide the desired structured image data, and on the basis of the data, the select items are displayed hierarchically. Specifically, the select items on the home page are displayed at the most left position whereas those on the image frame lower by one level are displayed at the indented position. Thus, the select items can be displayed in a system, thereby facilitating selection of the select items. It is of course that the select items over more levels can be contained in one sheet of select form.

The select items are displayed at the indented position to indicate the hierarchy as described above, while square check boxes are displayed immediately at the front of the respective select items to specify that the respective select items can be equally selected irrespective of the hierarchy.

Regarding the manner of retrieval using the select form, provision of the select item relative to a retrieval option permits more detailed retrieval. In the example of Fig. 9, only the highest level of the designated information can be extracted, the catalogue form for detailed retrieval can be extracted, the URL (uniform resource locator) in a plane text can be displayed, or only character information can be displayed.

In this example, the respective select forms display all image frame information (image or text) of the first page of the WWW covered by the select item. For example, the select form shown in Fig. 9 displays all of the display frame information of the home page and the select items contained in the image frame lower by one level than the home page. The subsequent select forms are similar to the former. In the case where image frame information dispalyed in one select form is large, one select form is composed of a plurality of pages.

The operation of Fig. 8 is repeated by the necessary number of times. The subsequent processing may be creation of the select form, or extraction of the final document.

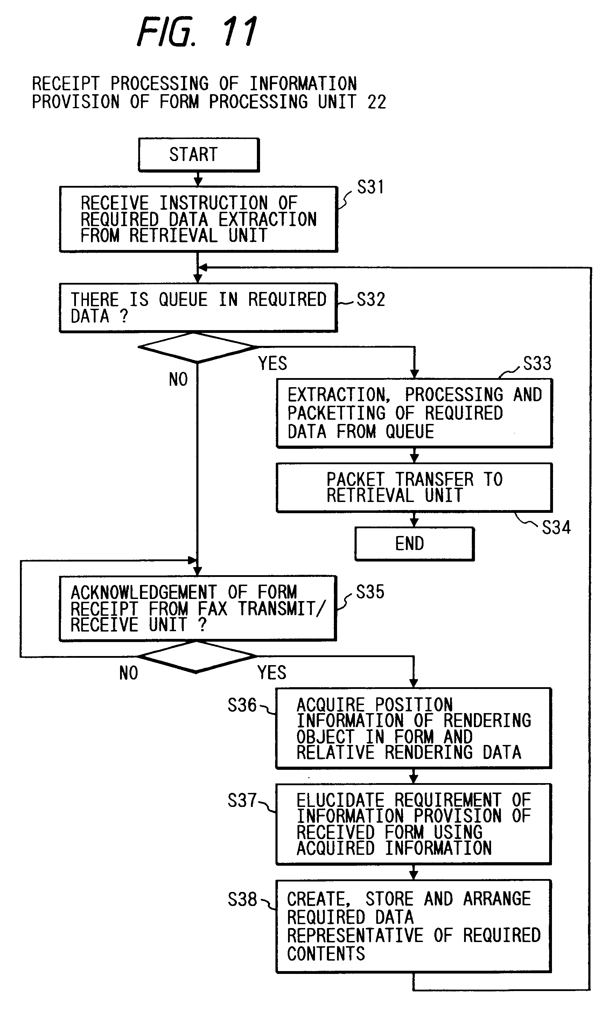

An operation of the form processing unit 22 will next be described in detail. Fig. 11 shows processing of receiving a request of information provision in the form processing unit 22. In the figure, it is assumed that the form analysis unit 29 in the form processing unit 22 has received image data of a checked initial form or the subsequent select form, created the data required by a user and held in a queue (not shown). In this case, when the form analysis unit 29 receives an instruction of extraction of the required data from the retrieval unit 23, it executes extraction of the required data from the queue, processing and packeting thereof. The form analysis unit 29 packet-transmits the data to the retrieval unit 23 (S31, S32, S33, S34).

If the required data is not present in the queue, for example, the initial form is not facsimile-transmitted from a user, the form analysis unit 29 in the form processing unit 22 waits facsimile-transfer of the initial form and others from the user (S35). When the facsimile transmit/receive unit 21 acknowledges receipt of the form in response to the facsimile transmission by the user (S35), the form analysis unit 29 analyses the received image to obtain the position information of a rendering object on the form, extracts the correlated rendering data from the rendering data holding unit 30 (S36) and elucidates the request for information provision of the received form (S37). The form analysis unit 29 creates the required data representative of the requested contents and arranges the data in a queue (S38). When an instruction of extraction of the required data is sent from the retrieval unit 23, the required data arranged in the queue are extracted and processed.

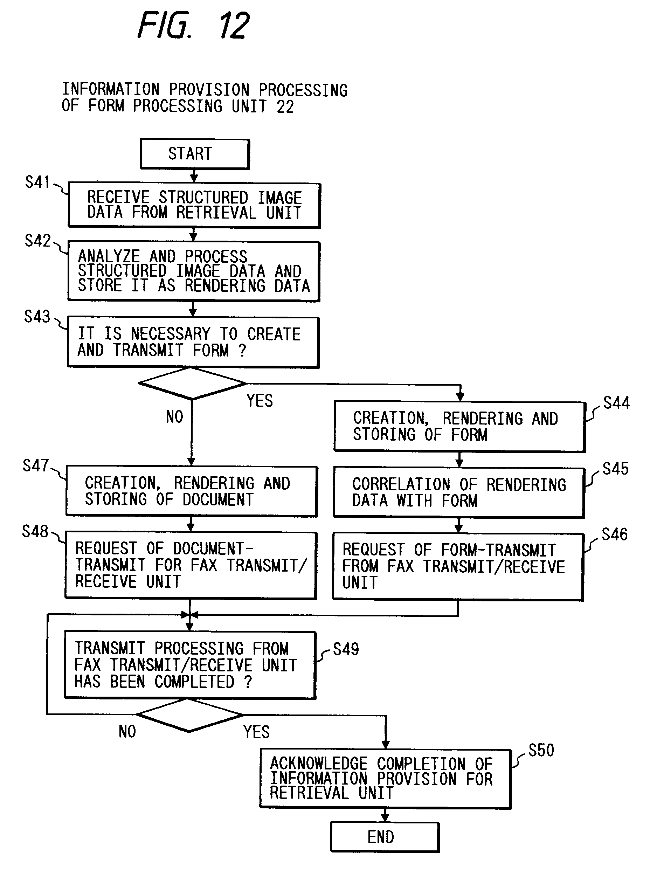

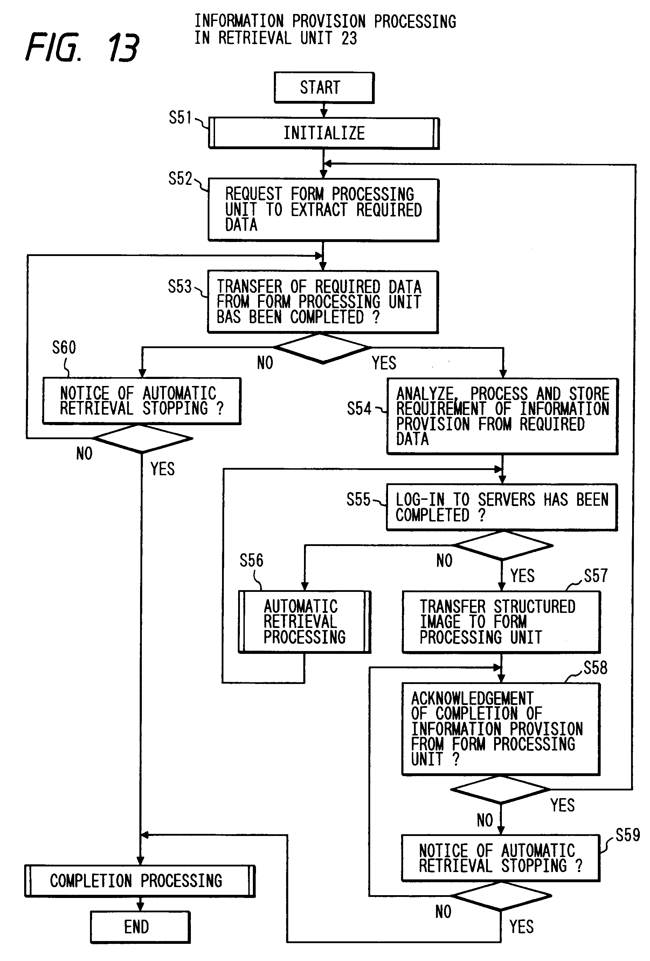

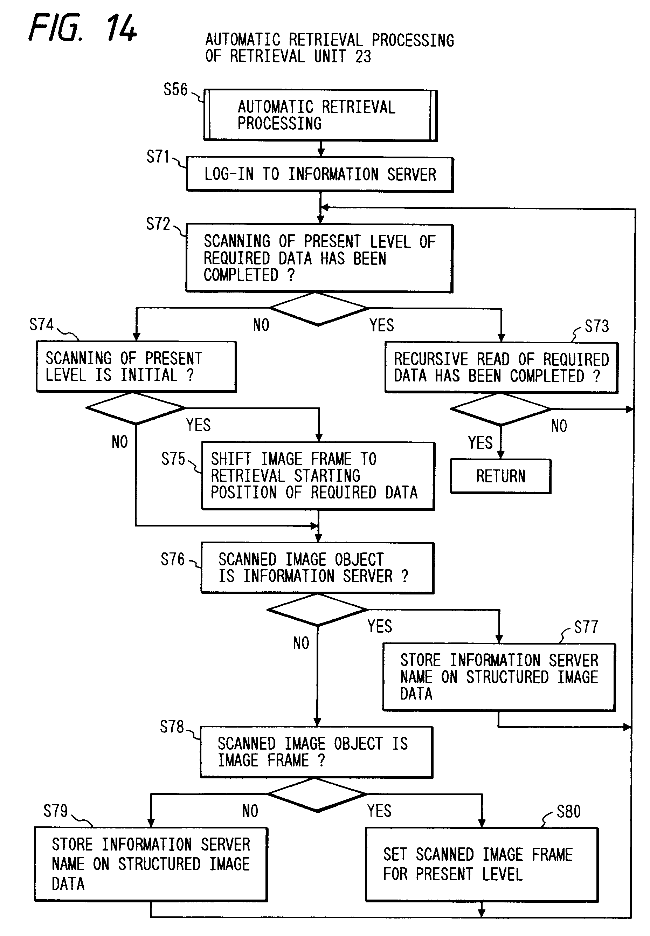

Fig. 12 shows the operation of the form processing unit 22 when information is provided to the user. In the figure, the form creation unit 28 in the form processing unit 22 receives the structured image data from the retrieval unit 23 (S41). The creation of the structured image data will be explained later with reference to Figs. 13 and 14. The form creation unit 28 analyzes the structured image data, processes it and stores the processed data as a rendering element data (S42). Where it is necessary to create a new select form, the form creation unit 28 creates the rendering data of the select form on the basis of the stored rendering data and stores the data thus created (S43, S44). The form creation unit 28 correlates the rendering data with the select form and stores the correlated data (S45), and requests the facsimile transmit/receive unit 21 to transmit the image data of the select form (S46). When the form creation unit 28 receives acknowledge of transmission completion from the facsimile transmit/receive unit 21, it acknowledges completion of the processing of information provision to the retrieval unit (S49, S50). When the structured data are data of a final document, it is not necessary to create the select form (S43). After creation, rendering and storing of the document, the form processing unit 22 requests the facsimile transmit/receive unit 21 to facsimile-transfer the document (S47, S48). In this case also, upon completion of the facsimile transfer, the processing of information provision is ended (S49, S50).

The processing in the retrieval unit 23 will next be described. Fig. 13 shows the operation of information provision in the retrieval unit 23. In this figure, the retrieval unit 23, after initializing, requests the form analysis unit 29 in the form processing unit 22 to extract the required data (S51, S52). When the retrieval unit 23 receives the required data from the form analysis unit 29, it analyzes the requirement represented by the required data, processes it and stores the processed data (S53, S54). The retrieval unit 23 logs in to information servers on the basis of the stored requirement to execute automatic retrieval processing (S56). The automatic retrieval processing is executed for all the logged-in servers (S55). The details thereof is shown in Fig. 14 and will be explained later. The automatic retrieval processing permits the structured image data to be created, and the structured image data are transferred to the form creation unit 28 in the form processing unit 22 (S57). As previously described with reference to Fig. 12, the form creation unit 28 renders a select form or a final document on the basis of the structured data, and transfers it to the user through the facsimile transmit/receive unit 21. After acknowledgement of completion of the facsimile transfer, the retrieval unit 23 returns to step S52 of requesting extraction of required data (S58) and repeats the processing for the required data in the same manner as described above. When stopping of the automatic retrieval is acknowledged, the processing of information provision is ended (S59, S60).

Fig. 14 shows the details of the automatic retrieval processing S56 inFig. 13. In this figure, the retrieval unit 23 first logs in to an information server (S71). After the log-in, image frames will be selectively displayed in hierarchy. Specifically, the image frame at a higher level contains the image objects representative of several pieces of information and also the image objects representative of the image frames at a lower level. Selection (scanning) of the objects representative the image frames at the low level reveals the image frames at the lower levels hierarchically. In the automatic retrieval processing, the image objects are sequentially scanned along, the hierarchy to create structured image data.

Specifically, whether or not the present level of the required data has been completely scanned is decided (S72). If "yes", whether or not the recursive read of the required data has been completed is decided (S73). If "yes", the process is returned to step S55 in Fig. 13. If "no", the retrieval process is returned to step S72. If scanning of the present level of the required data has not been completed at step S72, whether or not the scanning is an initial scanning in the present hierarchy is decided (S74). If "yes", the image frame is shifted to the start position of the retrieval of the required data (S75) and thereafter whether or not the image object for search is an information server is decided (S76). If not the initial scanning, whether or not the image object scanned is an information server is directly decided (S76). If the image object is an information server 27, the retrieval process stores the name of the information server 27 in the structured image data (S77) and returns to step S72. If not, the retrieval process decides whether or not the image object is an image frame (S78). If not, the process stores the image object scanned in the structured image data (S79) and returns to step S72. If the image object is an image frame, the process sets it for the present level (S80), i.e. lowers the level by one rank and returns to step S72.

In the operation described above, when the required data are sent, the retrieval process shifts the image frame to the retrieval starting position of the required data (S75). When the initial form is sent, the automatic retrieval processing is started from the initial image frame of the information server instructed by a check indication. Thus, the image objects on the first image frame are sequentially scanned. In this case, whenever the image object scanned is representative of an image frame, the image frame corresponding to the image object is opened and the image objects in the image frame are scanned. In this way, the image objects are scanned recursively from the higher level so that the image objects other than the image objects representative of the image frame at issue are successively stored in the structured image data (S79).

Where the select form is sent, the retrieval starting position is determined on the basis of indications of the bar code and check box, thereby opening the corresponding image frame. If the image frame displays a final document, the document is stored in the structured image data (S79). On the other hand, the image frame at issue contains the image object representative of the image frame at a lower level, the retrieval process recursively scans the image object on the image frame at the lower level, and stores the scanned image object in the structured image data, thereby preparing creation of a new select form.

In the example of Figs. 9 and 10, the image objects in two hierarchical levels were scanned to create a single select form. However, the image objects may be scanned for each level to create a series of two select forms sequentially. Further, if there are many hierarchical levels, three or more levels may be contained in a single select form.

As described above, in this embodiment, when retrieval is executed along the link of the information network in which an information object is linked with other information objects, the retrieval starting position is determined as necessitated by the initial form or the subsequent select form, and the image objects in one or plural hierarchical levels are scanned from the retrieval starting position so that they are indicated in a single sheet of select form which will be presented to a user by facsimile transfer. The user checks a desired image object(s) in the select form and facsimile-transfers the checked select form to set the image objects at a new retrieval starting position, thereby requesting extraction of the corresponding document and creation of a new select form. In this way, a user has only to facsimile-transfer the checked form to retrieve the information network such as hyper text and acquire a desired document. Further, if the image objects in plural hierarchical levels are contained in a single sheet of select form, the user can reach desired information in a shorter time. In this case, if the difference in level is represented by indentation, the user can recognize the level difference to determine the subsequent retrieval starting position.

### [Second Embodiment]

A second embodiment of the present invention will be described. In this embodiment, the information retrieval device itself has a function of image input and image output so that a form can be directly inputted to the information retrieval device and can be printed out directly therefrom.

### [2. 1 Entire Arrangement]

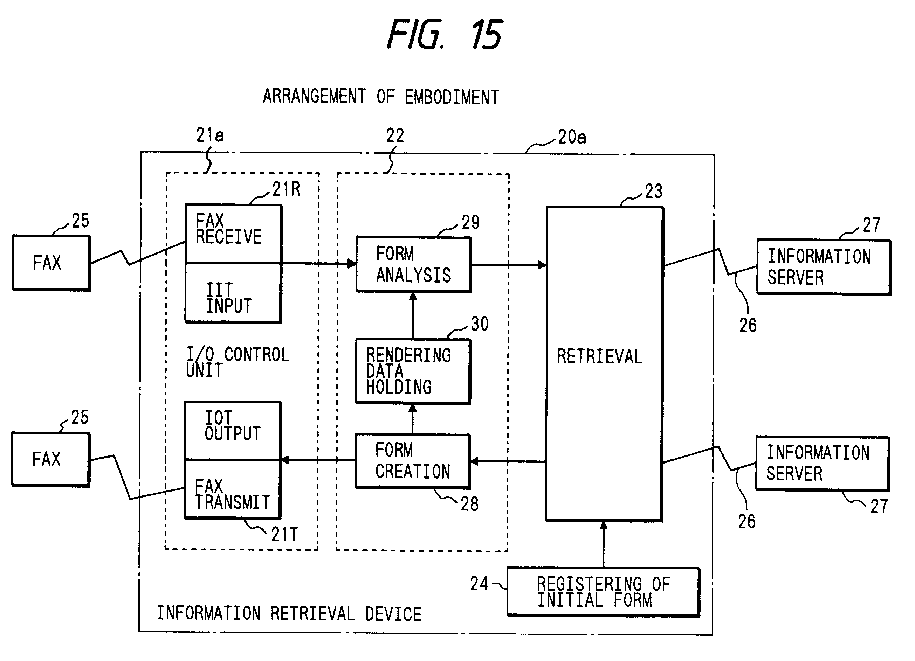

Fig. 15 shows the entire arrangement of this embodiment. In this figure, like reference numerals referring to like parts in Fig. 1 will not be explained in detail here.

In Fig. 15, an information retrieval device 20a includes an image input device (IIT), an image output device (IOT) and a document processing system having a function of facsimile transmit/receive and of workstation presented on a predetermined operating system (UNIX-OS). Various functions such as information retrieval are implemented by software. In this embodiment, instead of the facsimile transmit/receive unit 21 in Fig. 1, an input/output control unit 21a is provided. The input/output control unit 21a includes IIT and IOT in addition to a facsimile transmit unit 21T and a facsimile receive unit 21R.

This arrangement permits information on a network to be retrieved from a remote position using facsimile communication and also directly using a document processing system constituting the information retrieval device 20a.

In the following description, a difference of this embodiment from the second embodiment will be mainly explained.

### [2. 2 Registering of Information Servers]

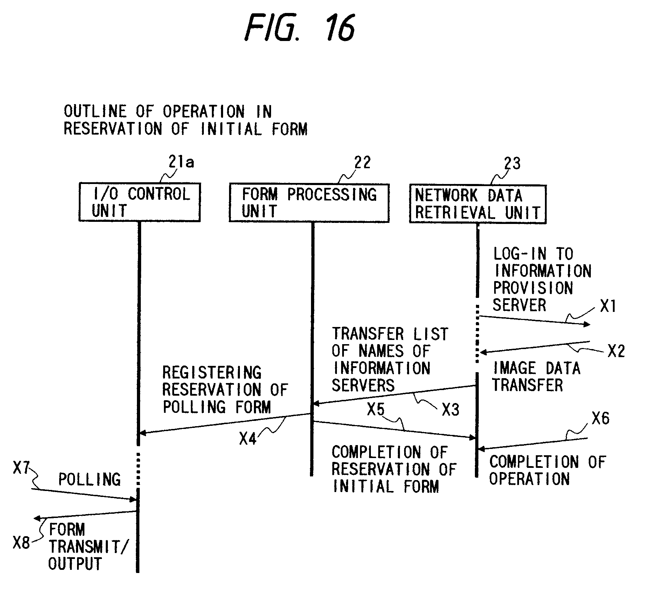

Fig. 16 illustrates data exchange in registering of information servers among the input/output control unit 21a, form processing unit 22 and retrieval unit 23. In this figure, like reference symbols refer to like parts in Fig. 5. In this embodiment, the input/output control unit 21a in place of the facsimile transmit/receive 21 executes facsimile transmit/receive (X7, X8') and print-out (X8') of a form.

The operation of the retrieval unit 23 in registering information servers is the same as in the first embodiment (see Fig. 6).

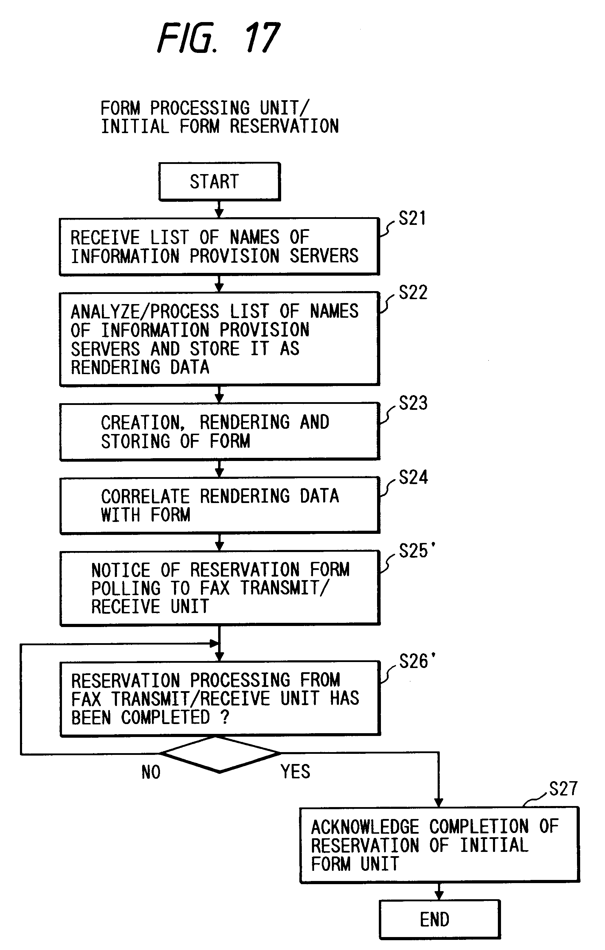

Fig. 17 shows the operation of the form processing unit 22 in registering information servers. In this figure, like reference symbols refer to like parts in Fig. 7. In this embodiment, in steps S25' and S26', the input processing unit 21a receives acknowledgement of reservation of a form and processes it.

### [2. 3 Provision of Information]

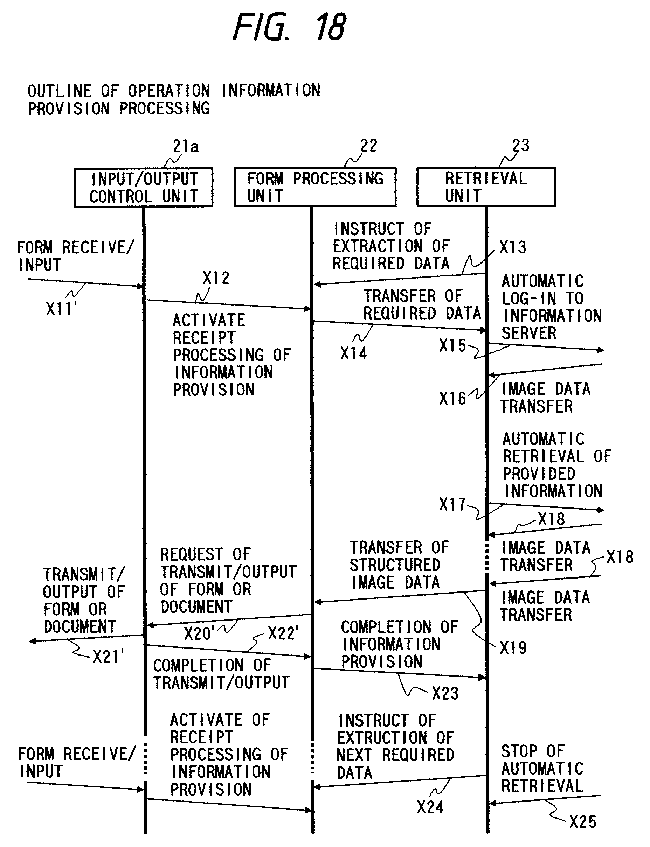

Fig. 18 illustrates data exchange in provision of information among the input/output control unit 21a, form processing unit 22 and retrieval unit 23. In this figure, like reference symbols refer to like parts in Fig. 8. In this embodiment, the input/output control unit 21a executes receipt/input of a form (X11'), executes transmission/output of the form and the others (X21'), receives a request for transmission/output of the form and others (X20') and acknowledges completion of transmission/output of the form (X22').

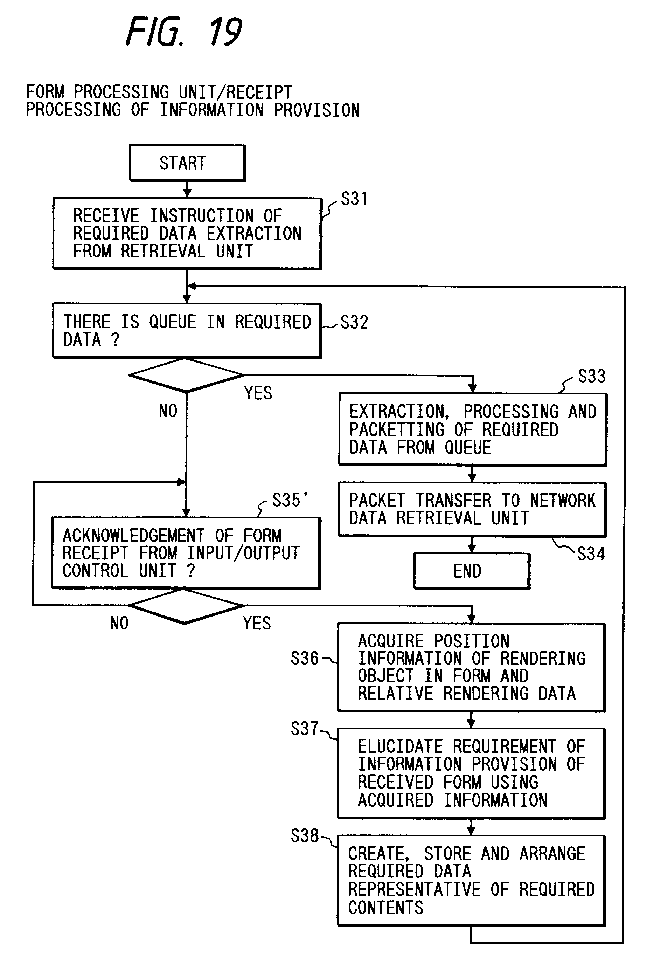

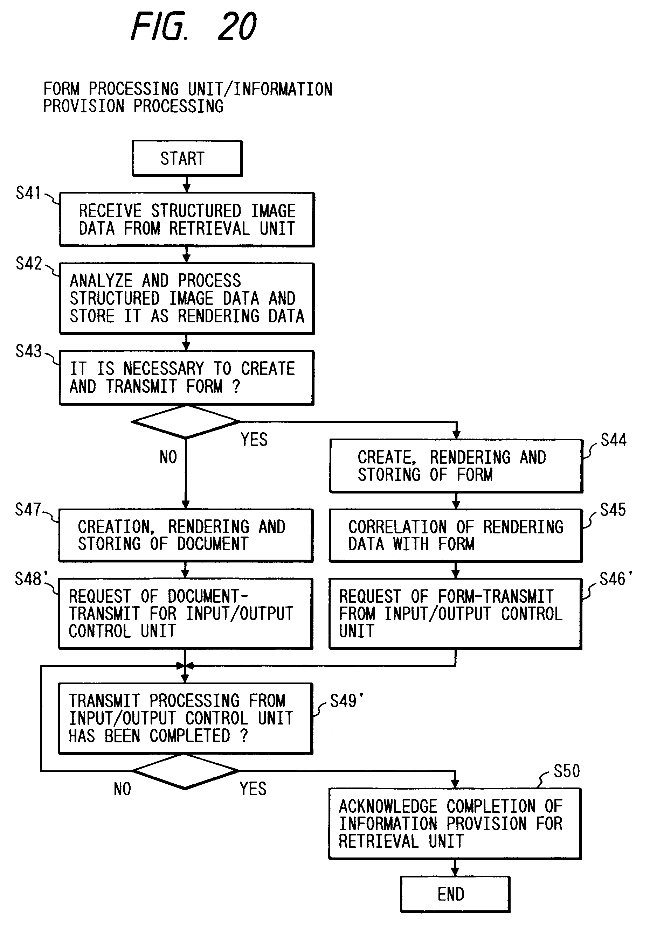

Fig. 19 shows the operation of the form processing unit 22 in receipt of information provision. Fig. 20 shows the operation of the form processing unit 22 in information provision. In Figs. 19 and 20, like reference symbols refer to like parts in Figs. 11 and 12. In this example, the input/output control unit 21a acknowledges receipt of a form that is decided in step S35'. Further, the input/output control unit 21a receives a request for transmission of a document or form (S46', S48').

The operation of the retrieval unit 23 in information provision is the same as in the first embodiment (see Figs. 13 and 14).

The present invention should not be limited to the embodiments described above, but can be realized in various modifications without departing the spirit thereof. For example, in place of including a check mark in each of check boxes of the form facsimile-transferred, the check boxes or the like of the form displayed on an image frame may be clicked to instruct retrieval, Further, the form may not necessarily be facsimile-transferred, but a form image may be operated by a monitor attached to the information retrieval device.

As described above, according to the present invention, image objects in one or plural levels from a retrieval starting position are scanned to create a select form representative of the image objects in the one or plural levels so that a user can designate a new retrieval starting position by box checking and continues the retrieval using one or plural select forms to acquire a final document. For this reason, the user can very easily execute the retrieval the information network such as a hyper text structure. Further, since the select form can be transmitted or received through facsimile transfer, the user can execute desired retrieval even when he does not have a prescribed terminal by his side.

## Claims

1. An information retrieval device, comprising:
means for inputting data representative of a selected form inclusive of a form discriminator and a select indication of a select item;
means for assessing, in accordance with said data representative of said selected form, at least one information object of an information object network in which each of information objects is correlated with at least one of other information objects;
means for creating data representative of a blank form inclusive of said select item on the basis of said at least one assessed information object; and
means for outputting said data representative of said blank form.

2. An information retrieval device according to claim 1, wherein said means for inputting said data representative of said selected form is a facsimile receiver for receiving said data representative of said selected form that is facsimile-transmitted.

3. An information retrieval device according to claim 1, wherein said means for inputting said data representative of said selected form is an optical reader for optically reading said selected form to create said data representative of said selected form.

4. An information retrieval device according to claim 1, wherein said means for outputting said data representative of said blank form is a facsimile transmitter.

5. An information retrieval devise according to claim 1, wherein said means for outputting said data representative of said blank form is means for printing said blank form in accordance with said data representative of said blank form.

6. An information retrieval device according to claim 1, wherein said blank form is created on the basis of a plurality of information objects with different hierarchical levels, and said select items are included in said blank form in a format representative of said hierarchical levels.

7. An information retrieval device according to claim 6, wherein said format representative of said hierarchical level includes an indent according to said hierarchical levels.

8. An information retrieval device according to claim 1, wherein said information object network is a hyper text.

9. An information retrieval device according to claim 1, wherein said accessing means is connected to a server for providing said information object network through a communication network.

10. An information retrieval device, comprising:
means for inputting data representative of a selected form inclusive of a form discriminator and a select indication of a select item;
means for assessing, in accordance with said data representative of said selected form, at least one information object of an information object network in which each of information objects is correlated with at least one of other information objects;
means for creating data representative of a document of retrieval result on the basis of said at least one accessed information object; and
means for outputting said data representative of said document.

11. An information retrieval method comprising the steps of:
inputting data representative of a selected form inclusive of a form discriminator and a select indication of a select item;
assessing, in accordance with said data representative of said selected form, at least one information object of an information object network in which each of information objects is correlated with at least one of other information objects;
creating data representative of a blank form inclusive of said select item on the basis of said at least one accessed information object; and
outputting said data representative of said blank form.

12. A computer-readable medium encoded with an information retrieval program, said program comprising the steps of:
inputting data representative of a selected form inclusive of a form discriminator and a select indication of a select item;
accessing, in accordance with said data representative of said selected form, at least one information object of an information object network in which each of information objects is correlated with at least one of other information objects;
creating data representative of a blank form inclusive of said select item on the basis of said at least one accessed information object; and
outputting said data representative of said blank form.
